# EUROPÄISCHE PATENTANMELDUNG

(11) **EP 4 019 319 A1**
(43) Veröffentlichungstag der Anmeldung: **29.06.2022**
(21) Anmeldenummer: 21211766.7
(22) Anmeldetag: 01.12.2021
(51) Int. Cl.: B60L 53/66, B60L 53/51, B60L 58/10

(54) **MONITORING- UND INFORMATIONSSYSTEM FÜR EIN ELEKTRISCH BETRIEBENES FAHRZEUG**

(30) Priorität: 22.12.2020 DE 102020216489
(71) Anmelder: VOLKSWAGEN AG, 38440 Wolfsburg (DE)
(72) Erfinder: Schriever, Dr. Udo, 38104 Braunschweig (DE)

(57) **Zusammenfassung**

Die Erfindung betrifft ein Monitoring- und Informationssystem (1) für den Fahrzeugnutzer und/oder Fahrzeughersteller eines elektrisch betriebenen Fahrzeugs (5) mit einem batterieelektrischen Speicher (21) für die Bereitstellung einer Fahrfunktion, wobei dem batterieelektrischen Speicher (21) eine Zyklus-Lebensdauer (Vₘₐₓ) zugeordnet ist, das heißt eine Anzahl von maximal nutzbaren Vollzyklen (V). Erfindungsgemäß summiert das Monitoring- und Informationssystem (1) sämtliche, seit Beginn der Fahrzeug-Gewährleistung genutzte Vollzyklen (V) zu einer aktuellen Ist-Zykluszahl (Vᵢₛₜ) auf. Auf der Grundlage der Ist-Zykluszahl (Vᵢₛₜ) generiert das System (1) Informationen und/oder Handlungsempfehlungen für den Fahrzeugnutzer und/oder Fahrzeughersteller, die die Nutzung des batterieelektrischen Speichers (21) betreffen.

## Beschreibung

Die Erfindung betrifft ein Monitoring- und Informationssystem für den Fahrzeughersteller und/oder den Fahrzeugnutzer eines elektrisch betriebenen Fahrzeugs nach dem Oberbegriff des Anspruches 1.

Elektrofahrzeuge mit batterieelektrischem Speicher bieten dem Fahrzeugnutzer prinzipiell die Möglichkeit, diesen Speicher neben der normalen Nutzung im Fahrbetrieb auch in effizienter Sondernutzung als Zwischenspeicher von zum Beispiel regenerativ erzeugter elektrischer Energie im Privathaushalt einzusetzen. Eine solche Eigennutzung von zum Beispiel regenerativem Solarstrom ist politisch gewollt und wird durch das Erneuerbare-Energien-Gesetz geregelt. Konkret ist daher die Vergütung für die Einspeisung in das öffentliche Stromnetz geringer als der Energiebezug aus dem öffentlichen Stromnetz. Ein bidirektionales Lademanagement von Batterien in Elektrofahrzeugen kann, ähnlich wie Stationärspeicher, diese Zielstellung unterstützen.

Der Fahrzeughersteller garantiert bei einem Neu-Fahrzeug eine Fahrzeug-Gewährleistung in Form einer Gewährleistungs-Fahrleistung von beispielhaft 160000 km oder einer Gewährleistungsfrist von beispielhaft 8 Jahren. Der in einem gattungsgemäßen Fahrzeug verbaute batterieelektrische Speicher kann beispielhaft eine Zyklus-Lebensdauer von maximal 1000 Vollzyklen aufweisen (bei Li-lonen-Batterien Stand der Technik).

Der vorliegenden Erfindung liegen die folgenden Aspekte zugrunde:
1. Speziell bei einem großen batterieelektrischen Energiespeicher ist die Zyklus-Lebensdauer der Batterie nach Ablauf der Fahrzeug-Gewährleistung meist noch nicht ausgeschöpft. Die Zyklus-Lebensdauer gibt die Zahl der maximal nutzbaren Vollzyklen, jeweils bestehend aus einem vollständigen Beladungsvorgang sowie einem vollständigen Entladungsvorgang, an. Beispielhaft ergibt sich bei einem batterieelektrischen Speicher mit einer Speicherkapazität von 100 kWh und einer gängigen Zyklus-Lebensdauer von 1000 Vollzyklen sowie einer Fahrzeugreichweite von 500 km pro Vollzyklus der folgende Sachverhalt: Für die bei der Fahrzeug-Gewährleistung angesetzte maximale Fahrleistung von 160000 km sind 320 Vollzyklen erforderlich. Nach Ablauf der Fahrzeug-Gewährleistung verbleiben daher noch 680 ungenutzte Vollzyklen.
2. Im Privathaushalt regenerativ (zum Beispiel mittels einer Solaranlage) erzeugte elektrische Energie kann entweder direkt verbraucht werden, in das Stromversorgungsnetz eingespeist werden oder in einem stationären Pufferspeicher zwischengespeichert werden und von dort bei Bedarf zu elektrischen Verbrauchern im Privathaushalt gespeist werden. Sofern dem Privathaushalt ein Elektrofahrzeug zur Verfügung steht, bietet sich die Nutzung des batterieelektrischen Speichers als Pufferspeicher an, um die im Privathaushalt regenerativ erzeugte elektrische Energie effizient zu nutzen.
3. Für eine solche Sondernutzung des batterieelektrischen Speichers außerhalb der eigentlichen Fahrzeugfunktion sind die folgenden technischen Voraussetzungen erforderlich: So muss das Elektrofahrzeug über ein bidirektionales Ladegerät mit AC-Anschluss im Fahrzeug oder über den DC-Ladeanschluss einen bidirektionalen Stromfluss ermöglichen.

Bislang ist die Sondernutzung des batterieelektrischen Speichers außerhalb der eigentlichen Fahrfunktion weder vorgesehen noch geregelt. Zudem ist nicht geklärt, wie die Sondernutzung des batterieelektrischen Speichers als Zwischenspeicher mit Blick auf Gewährleistung, Alterungseffekten und weiteren Aspekten durch die zusätzliche Zyklisierung außerhalb der originären Fahrfunktion bewertet werden kann. Von daher kann eine vom Fahrzeugnutzer vorgenommene Sondernutzung die vom Fahrzeughersteller garantierte Fahrzeug-Gewährleistung gefährden.

In Diskussion sind festgelegte Energiekontingente, die dem Fahrzeugnutzer im Rahmen des Fahrzeugkaufs ohne Einschränkung auf Gewährleistung zugestanden werden. Eine darüber hinaus führende Sondernutzung ist nicht vorgesehen, obwohl dies für den Fahrzeugnutzer interessant sein könnte, da die Lebensdauer des batterieelektrischen Speichers über die Fahrzeuglebensdauer nicht zwingend ausgeschöpft wird und die Sondernutzung des batterieelektrischen Speichers ein Geschäftsmodell für sowohl den Fahrzeugnutzer als auch den Fahrzeughersteller darstellen kann.

Derart festgelegte Energiekontingente eröffnen jedoch nicht das Potential einer kundenindividuell optimalen Doppelnutzung des batterieelektrischen Speichers. Eine solche starre Doppelnutzung berücksichtigt nicht den Umstand, dass eine solche Doppelnutzung für Vielfahrer mit hoher Laufleistung weniger einsetzbar ist, während Wenigfahrer mit geringer Laufleistung den batterieelektrischen Speicher verstärkt in Sondernutzung einsetzen können.

Aus der US 8 849 471 B2 und aus der US 8 831 786 B2 sind Monitoring- und Informationssysteme zur Bereitstellung von elektrischer Energie bekannt.

Die Aufgabe der Erfindung besteht darin, Maßnahmen bereitzustellen, mit denen eine Sondernutzung des batterieelektrischen Speichers eines elektrisch betriebenen Fahrzeugs außerhalb der eigentlichen Fahrfunktion transparent darstellbar ist und gegebenenfalls Handlungsempfehlungen für den Fahrzeughersteller und/oder für den Fahrzeugnutzer abgeleitet werden können.

Die Aufgabe ist durch die Merkmale des Anspruches 1 gelöst. Bevorzugte Weiterbildungen der Erfindung sind in den Unteransprüchen offenbart.

Die Erfindung betrifft ein Monitoring- und Informationssystem, bei dem ein batterieelektrischer Speicher eines elektrisch betriebenen Fahrzeugs eingebunden ist. Mit dem erfindungsgemäßen Monitoring- und Informationssystem kann eine Sondernutzung des batterieelektrischen Speichers transparent dargestellt werden. Zudem können daraus Handlungsempfehlungen abgeleitet werden. Solche Handlungsempfehlungen können sein: eine finanzielle Bewertung der Sondernutzung und/oder die Bereitstellung von Informationen über gegebenenfalls Einschränkungen der gewährten Lebensdauer für die Fahrfunktion. Zudem kann das Monitoring- und Informationssystem verwendet werden, um bei Sondernutzung des batterieelektrischen Speichers über die Fahrzeug-Gewährleistung hinaus eine, dem Fahrzeughersteller zukommende Sondernutzungs-Gebühr anzuzeigen.

Gemäß dem kennzeichnenden Teil des Anspruches 1 kann das Monitoring- und Informationssystem einen Summier-Baustein aufweisen. Dieser summiert sämtliche, seit Beginn der Fahrzeug-Gewährleistung genutzte Vollzyklen zu einer aktuellen Ist-Zykluszahl auf. Dem Monitoring- und Informationssystem kann ferner zumindest ein Ermittlungs-Baustein zugeordnet sein, der auf der Grundlage der Ist-Zykluszahl Informationen und/oder Handlungsempfehlungen für den Fahrzeughersteller und/oder den Fahrzeugnutzer generiert. Die Informationen sowie Handlungsempfehlungen betreffen allgemein die Nutzung des batterieelektrischen Speichers.

Mit der Erfindung ergeben sich - im Vergleich zu üblichen Stationärspeichern mit üblicherweise geringeren Energieinhalten - die folgenden Vorteile: der Eigennutzungsanteil bei bidirektionalem Laden kann erhöht werden; es müssen keine zusätzlichen Investitionen getätigt werden.

In einer technischen Umsetzung kann in einem Ermittlungs-Baustein aus der Zyklus-Lebensdauer und aus der aufsummierten Ist-Zykluszahl eine Rest-Zykluszahl bestimmt werden. Die Rest-Zykluszahl gibt die noch nutzbaren Vollzyklen bis Ablauf der Zyklus-Lebensdauer an.

Alternativ und/oder zusätzlich kann in einem weiteren Ermittlungs-Baustein aus einer, von der Fahrzeug-Gewährleistung umfassten Gewährleistungs-Zykluszahl und aus der aufsummierten Ist-Zykluszahl eine weitere Rest-Zykluszahl bestimmt werden. Diese gibt die noch bis Ablauf der Fahrzeug-Gewährleistung nutzbaren Vollzyklen an.

Bevorzugt ist es, wenn der batterieelektrische Speicher in Doppelfunktion nicht nur für die Fahrfunktion, sondern auch in Sondernutzung als ein Zwischenspeicher für elektrische Energie, insbesondere für regenerativ erzeugte elektrische Energie, einsetzbar ist.

Speziell in diesem Fall kann das Monitoring- und Informationssystem zusätzlich einen Auswerte-Baustein aufweisen. Dieser kann die Sondernutzung des batterieelektrischen Speichers finanziell bewerten. Alternativ und/oder zusätzlich kann der Auswerte-Baustein Einschränkungen in der Fahrzeug-Gewährleistung bestimmen, die sich aufgrund der Sondernutzung ergeben können.

Zusätzlich kann der Auswerte-Baustein eine bei der Sondernutzung für den Fahrzeugnutzer anfallende Sondernutzungs-Gebühr bestimmen. Die Sondernutzungs-Gebühr kommt dem Fahrzeughersteller zu, damit dieser die Fahrzeug-Gewährleistung trotz der eigentlich nicht vorgesehenen Sondernutzung aufrechterhält.

Beispielhaft kann der Auswerte-Baustein Angaben zum Energieumsatz im batterieelektrischen Speicher ermitteln, und zwar sowohl während der normalen Nutzung im Fahrbetrieb als auch während der Sondernutzung. Auf der Grundlage dieser Angaben kann der Auswerte-Baustein eine Bewertung des Batteriezustands (State of Health oder dergleichen) durchführen.

Die Sondernutzung des batterieelektrischen Speichers kann als Geschäftsmodell sowohl für den Fahrzeugnutzer als auch für den Fahrzeughersteller rentabel sein: So kann der Auswerte-Baustein des Monitoring- und Informationssystems ein nutzerseitiges Kosten-Einsparpotential ermitteln, das sich für den Fahrzeugnutzer bei der Sondernutzung des batterieelektrischen Speichers ergibt. Ein solches Einsparpotential berechnet sich aus einem Kostenvergleich von anfallenden Kosten bei einer Stromentnahme aus dem als Zwischenspeicher genutzten batterieelektrischen Speicher und von anfallenden Kosten bei einer Stromentnahme aus dem Stromversorgungsnetz.

Konkret kann dem Auswerte-Baustein zur Ermittlung des Einsparpotentials ein Kostenkalkulator zugeordnet sein. Ein solcher Kostenrechner für bidirektionales Laden schafft finanzielle Transparenz für den Nutzer und übt so einen zusätzlichen Anreiz aus. Der Kostenrechner kann auf der Grundlage der folgenden Parameter ein Einsparpotential für den Fahrzeugnutzer ermitteln:
- Stromkosten für eine Netzeinspeisung von regenerativ erzeugter elektrischer Energie;
- Stromkosten für die Entnahme von elektrischer Energie aus dem Stromversorgungsnetz;
- Kosten (das heißt Wertverlust des batterieelektrischen Speichers) aufgrund von Energiedurchsatz bei einem Vollzyklus bzw. anteilig die Kosten bei einem Teilzyklus; und
- Sondernutzungs-Gebühr zu Gunsten des Fahrzeugherstellers.

Nachfolgend ist ein Ausführungsbeispiel anhand der beigefügten Figuren beschrieben. Es zeigen:

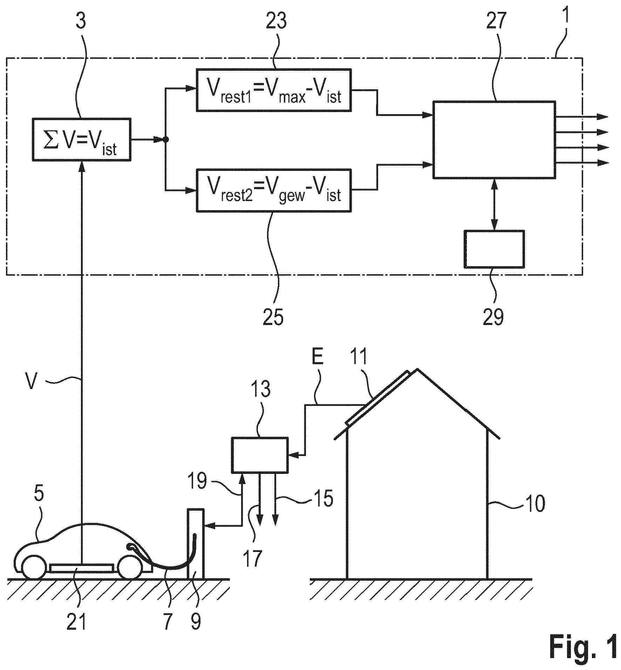

- Figur 1: in einer schematischen Ansicht ein in einer Heim-Ladestation eingebundenes Monitoring- und Informationssystem; und
- Figur 2: ein Blockschaltdiagramm, anhand dem eine finanzielle Bewertung einer Sondernutzung des batterieelektrischen Speichers veranschaulicht ist, die mit Hilfe des Monitoring- und Informationssystems erfolgt.

In der Figur ist grob schematisch ein Blockschaltdiagramm gezeigt, anhand dem der Aufbau und die Funktionsweise eines Monitoring- und Informationssystems 1 veranschaulicht ist.

Gemäß der Figur weist das Monitoring- und Informationssystem 1 einen Summier-Baustein 3 auf, der in Signalverbindung mit einem elektrisch betriebenen Fahrzeug 5 ist. In der Figur ist das elektrisch betriebene Fahrzeug 5 über ein Ladekabel 7 an einer Ladestation 9 eines Privathaushalts 10 angeschlossen. Die Ladestation 9 ist derart ausgelegt, dass ein bidirektionaler Stromfluss zwischen der Ladestation 9 und dem elektrisch betriebenen Fahrzeug 5 ermöglicht ist.

Der Privathaushalt 10 weist zudem eine Solaranlage 11 auf, mittels der elektrische Energie E regenerativ erzeugt wird. Die regenerativ erzeugte elektrische Energie E wird je nach Bedarf über eine Solaranlagen-Steuerung 13 wie folgt verteilt: Entweder wird die elektrische Energie E über eine Versorgungsleitung 15 direkt zu elektrischen Verbrauchern im Privathaushalt 10 gespeist. Alternativ dazu kann die elektrische Energie E über eine Versorgungsleitung 17 in ein Stromversorgungsnetz eingespeist werden. Ferner ist die Solaranlagen-Steuerung 13 über eine bidirektionale Versorgungsleitung 19 an der Ladestation 9 angebunden. Der Ladestation 9 ist ein bidirektionales Ladegerät zugeordnet, über das ein bidirektionalen Stromfluss ermöglicht ist. Dieser Steuer- und Regelalgorithmus der Energieflüsse kann unabhängig von der Solaranlagen-Steuerung auch durch ein smartes Heimenergie-Netzwerk übernommen werden: Bei Energieüberschuss wird die Lade- und Entladefunktion der Batterie durch Kommunikation mit der Ladestation und/oder Kommunikation mit dem Fahrzeug am Netz aktiviert: bei positiver Bilanz (Überdeckung) laden, bei negativer Bilanz (Unterdeckung) entladen.

Im Bedarfsfall kann der im Fahrzeug 5 verbaute batterieelektrische Speicher 21 nicht nur für die Fahrfunktion genutzt werden, sondern in Doppelfunktion auch als ein Zwischenspeicher genutzt werden, in dem die in der Solaranlage 11 regenerativ erzeugte Energie E zwischengespeichert wird. Bei Strombedarf im Privathaushalt 10 kann die zwischengespeicherte elektrische Energie E zeitversetzt (zum Beispiel nachts oder bei einem temporär höherem elektrischen Energieverbrauch im Privathaushalt als die Solaranlage liefert) zu elektrischen Verbrauchern im Privathaushalt 10 gespeist werden.

Mit Hilfe des Summier-Bausteins 3 des Monitoring- und Informationssystems 1 werden sämtliche, seit Beginn der Fahrzeug-Gewährleistung genutzte Vollzyklen V zu einer Ist-Zykluszahl Vᵢₛₜ aufsummiert. Ein Vollzyklus besteht aus einem vollständigen Ladevorgang sowie einem vollständigen Entladevorgang.

Es wird darauf hingewiesen, dass bei der finanziellen Bewertung der Sondernutzung des batterieelektrischen Speichers 21 als Zwischenspeicher anstelle von Vollzyklen auch anteilig der elektrische Energiebetrag oder jeglicher andere damit korrelierende Batterie-Parameter zugrunde gelegt werden können.

Zudem weist das Monitoring- und Informationssystem 1 einen ersten Ermittlungs-Baustein 23 sowie einen zweiten Ermittlungs-Baustein 25 auf. Im ersten Ermittlungs-Baustein 23 wird aus einer hinterlegten Zyklus-Lebensdauer Vₘₐₓ und aus der aufsummierten Ist-Zykluszahl Vᵢₛₜ eine Rest-Zykluszahl Vᵣₑₛₜ₁ bestimmt. Die Rest-Zykluszahl Vᵣₑₛₜ₁ gibt die noch nutzbaren Vollzyklen V bis zum Ablauf der Zyklus-Lebensdauer Vₘₐₓ an. Die Zyklus-Lebensdauer Vₘₐₓ gibt die maximal nutzbaren Vollzyklen bis zum Lebensende des batterieelektrischen Speichers 21 an.

Im zweiten Ermittlungs-Baustein 25 werden aus einer Gewährleistungs-Zykluszahl V_{gew} und aus der aufsummierten Ist-Zykluszahl Vᵢₛₜ eine Rest-Zykluszahl Vᵣₑₛₜ₂ bestimmt. Die Rest-Zykluszahl Vᵣₑₛₜ₂ gibt die bis Ablauf der Fahrzeug-Gewährleistung noch nutzbaren Vollzyklen V an. Die Gewährleistungs-Zykluszahl V_{gew} gibt die von der Fahrzeug-Gewährleistung umfasste Anzahl von Vollzyklen V an.

Das Monitoring- und Informationssystem 1 weist ferner einen Auswerte-Baustein 27 auf, der eine Sondernutzung des batterieelektrischen Speichers 21 finanziell bewertet. Zusätzlich werden in dem Auswerte-Baustein 27 gegebenenfalls Einschränkungen in der Fahrzeug-Gewährleistung bestimmt, die sich aufgrund der Sondernutzung ergeben können.

In dem Auswerte-Baustein 27 wird unter anderem eine bei der Sondernutzung für den Fahrzeugnutzer anfallende Sondernutzungs-Gebühr zugunsten des Fahrzeugherstellers bestimmt. Die Sondernutzungs-Gebühr ist fällig, damit der Fahrzeughersteller die Fahrzeug-Gewährleistung trotz der Sondernutzung aufrechterhält.

Der Auswerte-Baustein 27 ermittelt zudem Angaben zum Energieumsatz im batterieelektrischen Speicher 21, und zwar während der Nutzung im normalen Fahrbetrieb sowie während der Sondernutzung. Auf der Grundlage dieser Angaben erfolgt im Auswerte-Baustein 27 eine Bewertung des Batteriezustands (State of Health oder dergleichen).

Im Rahmen der finanziellen Bewertung der Sondernutzung kann der Auswerte-Baustein ein nutzerseitiges Kosten-Einsparpotential ermitteln, das sich für den Fahrzeugnutzer bei der Sondernutzung des batterieelektrischen Speichers 1 ergibt. Ein solches Kosten-Einsparpotential errechnet sich aus einem Kosten-Vergleich einer Stromentnahme aus dem als Zwischenspeicher genutzten batterieelektrischen Speicher 21 mit einer Stromentnahme aus dem Stromversorgungsnetz.

Zur Berechnung des Kosten-Einsparpotentials ist dem Auswerte-Baustein 27 ein Kostenkalkulator 29 zugeordnet, der auf der Grundlage der folgenden Parameter das mögliche Einsparpotential ermittelt:
- Stromkosten für eine Netzeinspeisung der regenerativ erzeugten elektrischen Energie E;
- Stromkosten für die Entnahme von elektrischer Energie aus dem Stromversorgungsnetz;
- Kosten (das heißt Wertverlust des batterieelektrischen Speichers 21) aufgrund von Energiedurchsatz bei einem Vollzyklus;

Nachfolgend ist eine vereinfachte Beispielrechnung zur Erläuterung des oben angedeuteten Geschäftsmodells beschrieben, und zwar auf Basis der folgenden fahrzeugspezifischen Daten:
- Batteriespeicher = 100 kWh
- Batteriekosten = 10000 €
- Zyklus-Lebensdauer Vₘₐₓ = 1000 (nicht Umfang der Fahrzeug-Gewährleistung, sondern bei Li-lonen-Stand der Technik)
- Fahrzeug-Reichweite pro Vollzyklus = 500 km
- Fahrzeug-Gewährleistung = 160000 km oder 8 Jahre

In der Praxis wird eine sich aus der Zyklus-Lebensdauer Vₘₐₓ von 1000 ergebende Gesamt-Fahrleistung von 500000 km durch den Fahrzeugnutzer selten abgerufen. Eine Sondernutzung mit finanziellem Benefit sowohl für den Fahrzeugnutzer als auch für den Fahrzeughersteller ist im Hinblick auf die folgende Kostenaufstellung machbar:
- Kosten für einen Vollzyklus (das heißt Energieumsatz von 100 kWh): 10000 €/1000 Zyklen = 10 € = 0,10 € pro kWh;
- Kosten für 1 kWh aus dem Stromversorgungsnetz: 0,30 €
- Rückvergütung für 1 kWh Netzeinspeisung: 0,10 €

Auf der Grundlage der obigen Daten muss daher der Fahrzeugnutzer für elektrische Energie aus dem Stromversorgungsnetz 0,30 € pro kWh zahlen, während für die Nutzung von im batterieelektrischen Speicher 21 zwischengespeicherter elektrischer Energie keine Kosten anfallen, mit Ausnahme der für die Batterienutzung anfallenden Kosten (Wertverlust). Diese liegen für 100 kWh Energiedurchsatz bei 10 € pro Vollzyklus (das heißt von 0,10 € pro kWh). Vor diesem Hintergrund ergibt sich für den Fahrzeugnutzer ein Anreiz für Eigennutzung in Höhe von 0,20 € (das heißt 0,30 € - 0,10 €).

Von daher bleibt bei einer umgelegten Sondernutzungs-Gebühr von 0,10 €/kWh ein Kosten-Einsparpotential pro kWh von 0,20 € - 0,10 € = 0,10 € zugunsten des Fahrzeugnutzers.

Die obige Beispielrechnung wird sich aufgrund der zukünftigen Kostenreduzierungen bei den Batteriespeichern und die durch das EEG geregelte kontinuierliche Absenkung der Einspeisevergütung weiter positiv entwickeln.

Erfindungsgemäß ist somit dieser prinzipiell Anreiz für eine Sondernutzung des batterieelektrischen Speichers mit dem Monitoring- und Informationssystem für den Fahrzeugnutzer transparent darstellbar.

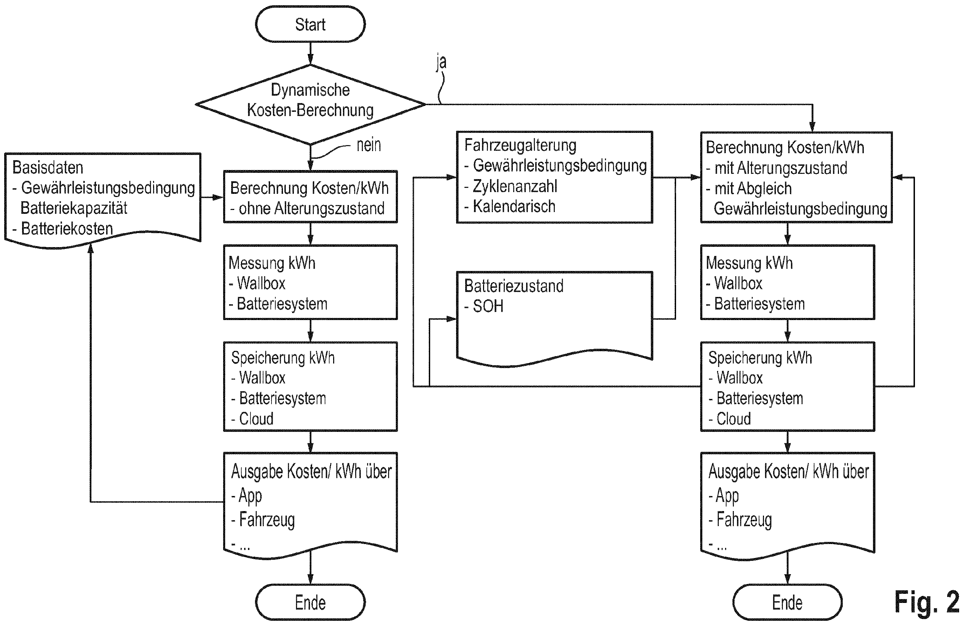

In dem in der Figur 2 gezeigten Blockschaltdiagramm ist beispielhaft eine finanzielle Bewertung einer Sondernutzung des batterieelektrischen Speicher 21 als Zwischenspeicher für die regenerativ erzeugte Energie E veranschaulicht. Demnach erfolgt nach dem Start der Bewertung zunächst in einem Programm-Baustein eine dynamische Kosten-Berechnung. In diesem Programm-Baustein wird ermittelt, ob ein normales Fahrverhalten des Fahrzeugnutzers vorliegt oder ob ein batterieschonendes Fahrverhalten des Fahrzeugnutzers vorliegt.

Bei Vorliegen eines normalen Fahrverhaltens (im Blockschaltdiagramm "nein") wird auf Grundlage von Basisdaten (das heißt Gewährleistungsbedingung, Batteriekapazität, Batteriekosten) eine Kostenberechnung durchgeführt. Beispielhaft können als Ergebnis dieser Kostenberechnung 10 Cent pro kWh als Sondernutzungs-Gebühr anfallen, die dem Fahrzeughersteller zukommt.

Bei Vorliegen eines batterieschonenden Fahrverhaltens (im Blockschaltdiagramm "ja") wird nicht auf Grundlage von Basisdaten, sondern auf Grundlage der Fahrzeugalterung (das heißt Gewährleistungsbedingung, Zyklenanzahl, kalendarisch) eine Kostenberechnung durchgeführt. Beispielhaft kann als Ergebnis dieser Kostenberechnung eine - im Vergleich zur normalen Fahrzeugnutzung - reduzierte Sondernutzungs-Gebühr von 8 Cent pro kWh anfallen.

### Bezugszeichenliste

- 1: Monitoring- und Informationssystem
- 3: Summier-Baustein
- 5: elektrisch betriebenes Fahrzeug
- 7: Ladekabel
- 9: Ladestation
- 10: Privathaushalt
- 11: Solaranlage
- 13: Solaranlagen-Steuerung
- 15, 17, 19: Versorgungsleitungen
- 21: batterieelektrischer Speicher
- 23, 25: Ermittlungs-Bausteine
- 27: Auswerte-Baustein
- 29: Kostenkalkulator
- E: regenerativ erzeugte elektrische Energie
- V: Vollzyklus
- Vₘₐₓ: Zyklus-Lebensdauer
- Vᵢₛₜ: Anzahl der seit Beginn der Fahrzeug-Gewährleistung genutzten Ist-Zyklen
- V_{gew}: die von der Fahrzeug-Gewährleistung umfasste Zyklus-Anzahl
- Vᵣₑₛₜ₁: verbleibende, noch nutzbare Rest-Zykluszahl bis Erreichen der Zyklus-Lebensdauer
- Vᵣₑₛₜ₂: verbleibende, noch nutzbare Rest-Zykluszahl bis Erreichen der von der Fahrzeug-Gewährleistung umfassten Zyklus-Anzahl

## Patentansprüche

1. Monitoring- und Informationssystem (1) für den Fahrzeugnutzer und/oder Fahrzeughersteller eines elektrisch betriebenen Fahrzeugs (5) mit einem batterieelektrischen Speicher (21) für die Bereitstellung einer Fahrfunktion, wobei dem batterieelektrischen Speicher (21) eine Zyklus-Lebensdauer (Vₘₐₓ) zugeordnet ist, das heißt eine Anzahl von maximal nutzbaren Vollzyklen (V), **dadurch gekennzeichnet, dass** das Monitoring- und Informationssystem (1) sämtliche, seit Beginn der Fahrzeug-Gewährleistung genutzte Vollzyklen (V) zu einer aktuellen Ist-Zykluszahl (Vᵢₛₜ) aufsummiert, und dass das System (1) auf der Grundlage der Ist-Zykluszahl (Vᵢₛₜ) Informationen und/oder Handlungsempfehlungen für den Fahrzeugnutzer und/oder Fahrzeughersteller generiert, die die Nutzung des batterieelektrischen Speichers (21) betreffen.

2. Monitoring- und Informationssystem nach Anspruch 1, **dadurch gekennzeichnet, dass** das Monitoring- und Informationssystem ein Ermittlungs-Baustein (23) aufweist, der aus der Zyklus-Lebensdauer (Vₘₐₓ) und aus der Ist-Zykluszahl (Vᵢₛₜ) eine Rest-Zykluszahl (Vᵣₑₛₜ₁) bestimmt, die die noch nutzbaren Vollzyklen (V) bis Ablauf der Zyklus-Lebensdauer (Vₘₐₓ) angibt.

3. Monitoring- und Informationssystem nach Anspruch 1 oder 2, **dadurch gekennzeichnet, dass** in einem Ermittlungs-Baustein (25) aus einer von der Fahrzeug-Gewährleistung umfassten Gewährleistungs-Zykluszahl (V_{gew}) und aus der Ist-Zykluszahl (Vᵢₛₜ) eine Rest-Zykluszahl (Vᵣₑₛₜ₂) bestimmt, die die bis Ablauf der Fahrzeug-Gewährleistung noch nutzbaren Vollzyklen (V) angibt.

4. Monitoring- und Informationssystem nach einem der vorhergehenden Ansprüche, **dadurch gekennzeichnet, dass** der batterieelektrische Speicher (21) in Doppelfunktion nicht nur für die Fahrfunktion, sondern auch in Sondernutzung als ein Zwischenspeicher für elektrische Energie (E), insbesondere für regenerativ erzeugte elektrische Energie, einsetzbar ist.

5. Monitoring- und Informationssystem nach Anspruch 4, **dadurch gekennzeichnet, dass** das System (1) einen Auswerte-Baustein (27) aufweist, der die Sondernutzung des batterieelektrischen Speichers (21) finanziell bewertet, und/oder Einschränkungen in der Fahrzeug-Gewährleistung bestimmt, die sich aufgrund der Sondernutzung ergeben können.

6. Monitoring- und Informationssystem nach Anspruch 5, **dadurch gekennzeichnet, dass** der Auswerte-Baustein (27) eine bei der Sondernutzung für den Fahrzeugnutzer anfallende Sondernutzungs-Gebühr bestimmt, die dem Fahrzeughersteller zukommt, damit die Aufrechterhaltung der Fahrzeug-Gewährleistung trotz Sondernutzung gewährleistet ist.

7. Monitoring- und Informationssystem nach Anspruch 5 oder 6, **dadurch gekennzeichnet, dass** der Auswerte-Baustein (27) Angaben zum Energieumsatz im batterieelektrischen Speicher (21) ermittelt, und zwar während der Nutzung im normalen Fahrbetrieb und während der Sondernutzung, und dass auf der Grundlage dieser Angaben eine Bewertung des Batteriezustands (State of Health oder dergleichen) erfolgt.

8. Monitoring- und Informationssystem nach einem der vorhergehenden Ansprüche, **dadurch gekennzeichnet, dass** in dem System (1) ein elektrisch betriebenes Fahrzeug (5) einbindbar ist, das über ein bidirektionales Ladegerät mit AC-Anschluss im Fahrzeug oder über den DC-Ladeanschluss einen bidirektionalen Stromfluss ermöglicht.

9. Monitoring- und Informationssystem nach einem der Ansprüche 5 bis 8, **dadurch gekennzeichnet, dass** der Auswerte-Baustein (27) ein nutzerseitiges Kosten-Einsparpotential ermittelt, das sich für den Fahrzeugnutzer bei der Sondernutzung des batterieelektrischen Speichers (21) ergibt, und zwar aus einem Vergleich einer Stromentnahme aus dem als Zwischenspeicher genutzten batterieelektrischen Speicher (21) und einer Stromentnahme aus dem Stromversorgungsnetz.

10. Monitoring- und Informationssystem nach Anspruch 9, **dadurch gekennzeichnet, dass** der Auswerte-Baustein (27) zur Ermittlung des Kosten-Einsparpotentials einen Kostenkalkulator (29) aufweist, der auf der Grundlage folgender Parameter das Kosten-Einsparpotential ermittelt:
- Stromkosten für eine Netzeinspeisung von regenerativ erzeugter elektrischer Energie,
- Stromkosten für die Entnahme von elektrischer Energie aus dem Stromversorgungsnetz,
- Kosten (das heißt Wertverlust des batterieelektrischen Speichers) aufgrund von Energiedurchsatz bei einem Vollzyklus,
- Sondernutzungs-Gebühr zugunsten des Fahrzeugherstellers.
